Europäisches Patentamt

European Patent Office

Office européen des brevets

(19)

(11) Publication number: **0 235 403**
A1

# (12) EUROPEAN PATENT APPLICATION

(21) Application number: 86202028.6

(22) Date of filing: 20.10.86

(51) Int. Cl.⁴: **B 26 D 5/12**

(30) Priority: 18.10.85 IT 8255185

(43) Date of publication of application: 09.09.87
Bulletin 87/37

(84) Designated Contracting States: ES GR

(71) Applicant: **Citton, Gianni, Via Piovego, 8, 31030 Borso del Grappa, Treviso (IT)**

(72) Inventor: **Citton, Gianni, Via Piovego, 8, 31030 Borso del Grappa, Treviso (IT)**

(74) Representative: **Piovesana, Paolo, Corso del Popolo, 70, I-30172 Venezia-Mestre (IT)**

(54) **Portable operating apparatus with inter-changeable heads.**

(57) The portable operating apparatus with interchangeable heads comprises:

a) a basic unit including, inside a body (1) provided with a handle (2),:
- a motor (3),
- a hydraulic pump (7) driven by said motor (3),
- a cylinder-piston system (18, 19) connected to said pump (7) through at least a duct (14, 29) for unidirectional feeding of the fluid, the rod (20) of the piston (19) coming out from the body,
- a connection flange (4) for an operating head (43, 46, 51, 56, 63, 68), said flange encircling the passage opening of said rod (20),
- a tank (5) for feeding the fluid to the pump (7),
- at least a duct (30) directly connecting said cylinder (18) to said tank (5), provided with a valve (31) actuable from outside,

b) a plurality of operating heads (43, 46, 51, 56, 63, 68), each of them provided with a flange (42) engageable with said connection flange (4) of the basic unit, and

c) means (40) for quickly binding said flanges (4, 42), coupled in facing conditions, so that the displacement of the piston rod (20) of the basic unit causes actuating of the operating head (43, 46, 51, 56, 63, 68).

ACTORUM AG

The present invention relates to a portable operating apparatus with interchangeable heads.

The known operating machines, such as shears, bar benders, cutting machines and so on, consist of a unit comprising an electrical or internal combustion motor driving an oil pump which causes the displacement of a piston operating a tool.

According to the requirements, there are cutting machines, bending machines, shearing machines, drilling machines.

These known operating machines indeed present some drawbacks, and in particular:

- the possibility to carry out only the function for which they have been planned and realized, with the consequent necessity of having as many different machines as the workings have to be carried out,

- a high cost of investment that this lot of machines requires.

The object of the invention is to eliminate these drawbacks and to realize a portable operating apparatus which can carry out several functions, which is reliable and safe, which has a moderate cost, which presents high performances of resistance and therefore of duration.

Another object of the invention is to realize a portable operating apparatus which enables to increase the set of the heads which can be used with it.

A further object of the invention is to realize a portable operating apparatus which enables to quickly and easily replace the operating head.

All these objects are attained, according to the invention, by a portable operating apparatus with interchangeable heads characterised by comprising:

a) a basic unit including, inside a body provided with a handle,:

- a motor,

- a hydraulic pump driven by said motor,

- a cylinder-piston system connected to said pump through at least a duct for unidirectional feeding of the fluid, the rod of the piston coming out from the body,

- a connection flange for an operating head, said flange encircling the passage opening of said rod,

- a tank for feeding the fluid to the pump,

- at least a duct directly connecting said cylinder to said tank, provided with valve actuable from outside,

b) a plurality of operating heads, each of them provided with a flange engageable with said connection flange of the basic unit, and

c) means for quickly binding said flanges, coupled in facing conditions, so that the displacement of the piston rod of the basic unit causes actuating of the operating head.

A preferred embodiment of the present invention is described in detail hereinafter by way of non-limiting example with reference to the accompanying drawings in which:

Figure 1 is a perspective view of a basic unit according to the invention provided with a shearing head,

Figure 2 is an enlarged longitudinal section view thereof,

Figure 3 is an enlarged sectional partial view of the pump,

Figure 4 is a detailed enlarged view of the head of the piston,

Figure 5 is a plan view of the shearing head,

Figure 6 is a plan view of a first embodiment of a bending head,

Figure 7 is a lateral view thereof,

Figure 8 is a plan view of a second embodiment of a bending head,

Figure 9 is a plan view of a snips head with coplanar blades,

Figure 10 is a partly fragmented plan view of a snips head having blades scissor-operable,

Figure 11 is a lateral view of a punching head, and

Figure 12 is a plan view of a divaricating head.

As can be seen from the figures the portable operating apparatus according to the invention substantially comprises a body 1 provided with handle 2, and having at one end an electrical motor 3 and at the other end a flange 4 supporting the heads.

The body 1 comprises an upper tank 5 for the fluid, communicating with a cylindric hollow 6, in which a piston pump 7 is housed.

In particular the pump 7 comprises a three-lobes 10 body having a middle cylindric hollow 8, at which cylindric radial seats 9 end up, foreseen in the three lobes 10. Inside each cylindric seat 9, which is crossed by a groove 12 transversely made in the corresponding lobe 10, an axially displaceable little piston 11 is housed.

At the outer end of each cylindric seat 9, beyond the corrresponding groove 12, holes 13 are foreseen. Ducts 13 end up at these holes 13 connecting the seat 9 with the front surface of the pump (at the right hand in figure 2).

The ducts 14 are provided with non-return valves (not shown in the drawings) to allow the unidirectional flow of the fluid pumped by the pistons 11.

Each piston 11 is kept with its inner end projecting inside the cylindric hollow 8 and is also elastically kept into touch with a common annular element 15 having diameter less than the diameter of the hollow 8 and housed inside this.

An eccentric pin 16 bound to the shaft of the motor 3, is engaged within the annular element 15. To said shaft also a traditional cooling fan 17 is applied.

Furthermore a cylindric chamber 18 is foreseen inside the body 1, coaxially with the pump 7. Within said chamber the head of a piston 19 is displaceable, having the rod 20 which comes out from the flange 4.

In the body 1, outwardly the cylindric chamber 18, a longitudinal duct 21 is foreseen, connecting the tank 5 with the chamber 18 downstream the head of the piston 19 through a short radial duct 22.

Furthermore in the body 1, outwardly at the chamber 18, a cylindric seat 23 is foreseen housing a safety-valve. This valve comprise a point-shaped stem 25, pushed by a solenoidal spring 26 to close a duct 28 connecting the seat 23 with the chamber 18 upstream the head of the piston 19.

The elastic reaction of the spring 26 is adjusted by a bush 26 screwed in a corresponding threaded portion of the seat 23.

A short radial duct 24, foreseen in the body 1 outwardly the chamber 18, connects the seat 23 with the chamber 18 downstream the head of the piston 19.

Furthermore in the rear wall of the chamber 18, ducts 29 are foreseen, coaxially extending from the ducts 14 of the pump 7.

Finally in the body 1, outwardly at the chamber 18, a further duct 30 is foreseen, connecting this chamber with the tank 5 through a valve 31, which in the illustrated embodiment is handly-actuable by the user.

The head of the piston 19 is provided with a mushroom-shaped valve 32, having its head 33 facing two passing holes 34 made in the same head of the piston 19. A solenoidal spring 35 keeps elastically spaced apart said head 33 from the head of the piston 19.

A further solenoidal spring 36 is foreseen around to the rod 20 of the piston 19.

The flange 4 has the central hole, through which the rod 20 passes, provided with a longitudinal groove guiding a spline 38 applied to said rod 20, which therefore can axially be displaced but cannot rotate around its longitudinal axis.

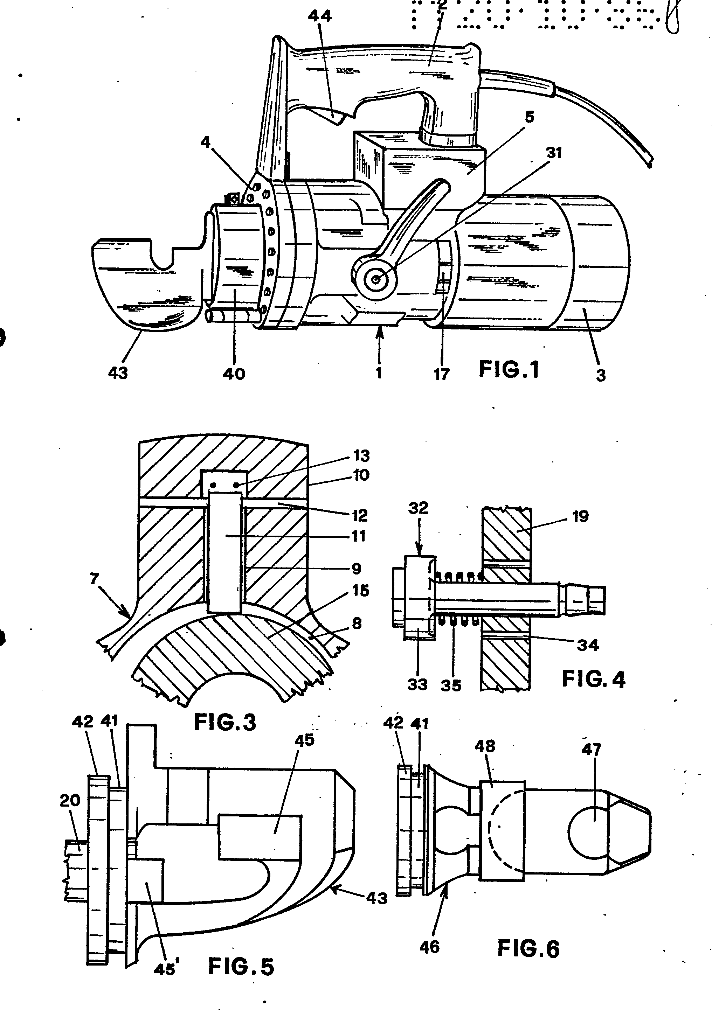

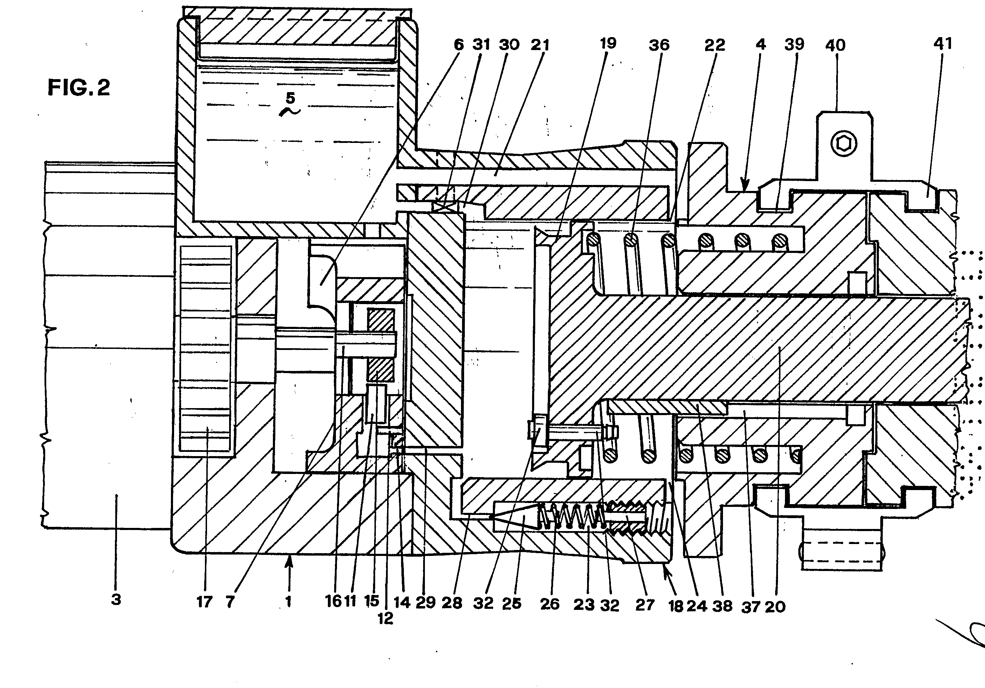

The outer side surface of the flange 4 is provided with a perimetric groove 39, to be engaged by a corresponding edge of a removable ring 40. This ring consists of two portions hinged at one end and provided with mutual bond means at the other end. The other edge of the ring 40 is engageable with a corresponding groove 41 foreseen in the flange 42 of the head of the tool, and in particular on the shearing head in figure 5.

The portable apparatus according to the invention operates as follows:

in rest condition the soleinoidal spring 36 keeps the head of the piston 19 adhering to the rear wall of the cylindric chamber 18, so that the head of the valve 32 adheres to the head of the piston 19 and closes the holes 34.

In this condition the solenoidal spring 26 keeps the stem 25 of the safety-valve in closing the duct 28. When the user actuated a trigger 44 foreseen in the handle 2 thus causing the electrical motor 3 to start, the rotation of the eccentric 16 causes, through the annular element 15, the reciprocal movement of the piston 11 inside the respective seats 9. In this way the oil which comes from the tank 5 and practically fills all the inner hollows of the pump 7, and in particular the grooves 12, is pumped from the pistons 11, through the ducts 14 and 29 to the cylindric chamber 18.

The continuous flow of oil inside this chamber 18 causes the displacement of the piston 19 and the consequent outcoming of its rod 20, which in this way can drive the operating head coupled to it. In the embodiment shown in figures 1 and 5, a movable blade 45' cooperating with the fixed blade 45 of the shearing head 43 is applied to the rod 20 of the piston 19 .

Furthermore the oil pressure against the head of the piston 19 keeps the head 33 of the mushroom-shaped valve 32 adhering to the head of the piston 19.

During the outcoming of the rod 20, the oil downstream the head of the piston 19 is discharged, through the ducts 22 and 21, into the tank 5.

When the piston 19 has reached its front end-of-travel condition, and consequently the tool has completed its active stroke, the stem of the valve 32 interacts with the front wall of the chamber 18 axially displacing backward the same valve 32 and removing its head from the head of the piston 19, thus opening the holes 34. In this way the oil further entering into the chamber 18 passes through these holes 34 and returns, through the duct 21, into the tank 5.

At this moment the user, releasing the gripper 44, halts the electric motor 3, and stops the feeding of oil inside the chamber 18. Since the holes 34 are open during this phase, after a short time the pressures downstream and upstream the head of the piston 19 become equal and the elastic reaction of the spring 36, previously compressed, prevails causing the return stroke of the piston 19.

In the case in which, for example during the shearing of a very hard piece, the outcoming of the piston 19 should be impeded, thus strongly increasing the pressure inside the chamber 18, the safety-valve 25 intervenes. Indeed the high pressure upstream the piston 19 prevails on the elastic reaction of the solenoidal spring 26 and causes the back displacement of the stem 25 and the opening of the duct 28.

In this way the oil enters the seat 23, passes through the bush 27 and enters the chamber 18, downstream the head of the piston 19, returning into the tank 5 through the duct 21.

If the return stroke of the piston before reaching the front end-of-travel position is required, it is sufficient to stop the motor 3 and to handly open the valve 31. In this way the oil housed inside the chamber 18 can return into the tank 5 through the duct 30.

In order to use the portable apparatus according to the invention with a different operating head, the user disengages the portions of the ring 40, takes away the shearing head 43 and replaces it with another one fit to carry out the new function.

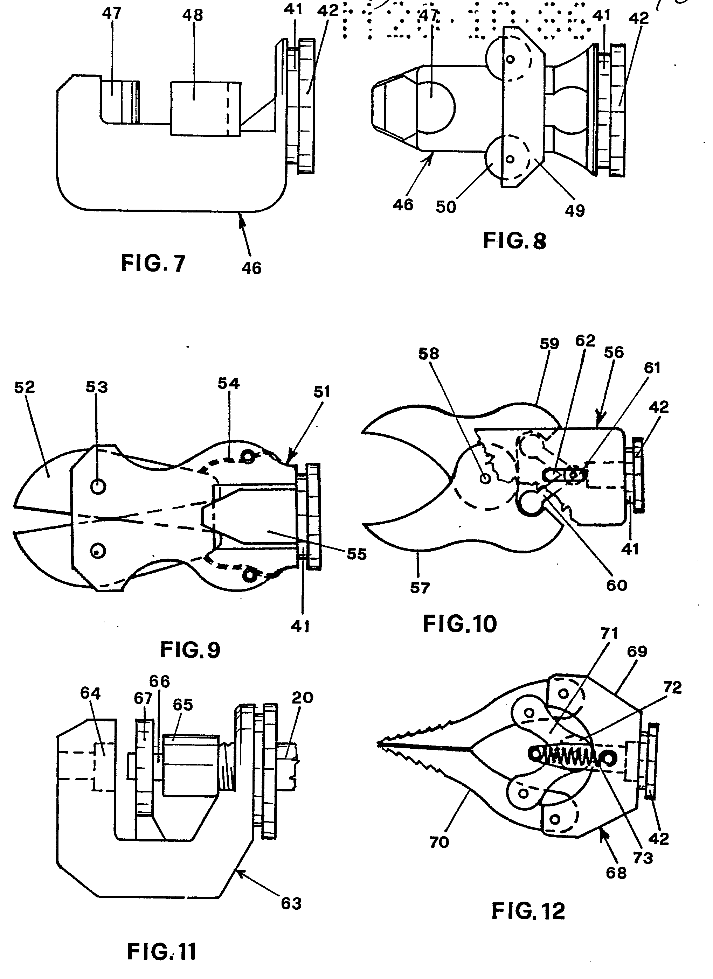

In the figures 6 and 7 a bending head is shown, to which a semicylindric mould 47 is bound, complementary to a movable U-shaped counter-mould 48, actuated by the rod 20 of the piston 19. It is clear that, during the actuating of the apparatus and therefore during the advancment of the counter-mould 48 towards the mould 47, the bending of a metal bar interplaced between them is caused.

In the figure 8 a second embodiment of a bending head is shown in which the movable counter-mould 49 is provided with a pair of rollers 50, allowing to carry out the soft bending of the metal bar, without any streatching.

In figure 9 a snips head 51 is shown having coplanar blades 52. These blades are articulated to two pins 53 and are kept in open condition by the elastic reaction of two springs 54. A wedge 55 is placed between the arms of the blades 52, beyond their articulation pins 53.

While operating, the advancement of the rod 20 causes the displacement of the wedge 55 and the divarication of the arms with the consequent rotation and closure of the blades 52.

Due to the springs 54, which ensure the elastic return of the blades to the open condition when the rod 20 goes back inside the operating unit, no connnection is necessary between the rod 20 and the wedge 55, but only a simple rest which makes easier and quicker the engagement between the head and the operating unit.

In figure 10 a snips head 56 is shown having the blades 57 scissorsr-actuable.

The blades 57 are articulated to a pin 58 and two pushers 60 are toggle-articulated to the arms 59 of said blades and to a block 61, which is obliged to move along two longitudinal holes 62 made in the body of the head 56. While operating, the head of the rod 20 is rested against the block 61 which, owing to the outcoming of the rod, is axially displaced and causes the rotation to the close condition of the blades 57.

In figure 11 a punching head 63 is shown comprising a die 64 to be applied to the flange 4 of the operating unit, and a spindle 65 screwing the punch 66 to the rod. An extracter member 67 bound to the die 64 holds the metal sheet placed between said die 64 and the punch 66 during the return-stroke of this punch.

In figure 12 a divaricating head 68 is shown comprising a body to be applied to the flange 4 and a pair of divaricating arms 70 articulated to the body 6. Two smaller arms 71 are furthermore articulated to these arms 70 even articulated to each other and to an actuating middle block 72, against which the end of the rod 20 rests. A pair of traction-operating solenoidal springs 73 keep both the two arms 70 in approached condition. In operating, the axial advancement of the rod 20 causes the forward displacement of the block 72 which, overcoming the elastic reaction of the springs 73 pushes the arms 71 to divaricate the two arms 70.

When the rod 20 goes back, the springs 73 bring the arm 70 in approached condition.

In the shown embodiment, it has been referred to an apparatus provided with a simple-acting cylinder, in which the active stroke of the piston 19 occurs during the inlet of the oil inside the chamber 18, whereas the return stroke is obtained through the elastic reaction of the spring 36 compressed during the active stroke.

It is indeed foreseeable an embodiment with a double-acting cylinder, in which both the strokes are controlled by the oil.

This embodiment, which is not shown in the drawings, obviously requires a suitable distribution system which selectively allows the feeding of the oil inside the chamber 18 downstream and upstream the piston 19, but all this is well known to the skilled man and therefore doesn't require any further information.

Obviously in the case of a double-acting cylinder it is not possible to keep the connection between the end of the rod 20 and the corresponding portion of the operating head by a simple rest, but it is necessary to replace it with a steady connection, for example obtainable by screwing.

It is clear that in this case the springs, ensuring the elastic return to the rest condition of the movable parts of the operating heads, are not be necessary.

In the shown embodiment a handly-actuable valve 31 has been described, but it is also foreseeable an embodiment with an electro-valve controlled by the samë trigger 44 actuating the electric motor 3. In this case, when the user stops the motor 3, whatever is the position of the piston 9 coming out from the flange, the electrovalve 31 intervenes and controls the discharge of the oil into the tank 5 allowing the piston 19 to return to its rest position, even if the front end-of-travel conditon has not been reached.

Finally the motor 3 driving the pump 7 has been

- 14 -

illustrated as an electric motor, but it could be of another kind, particularly an internal combustion one, advantageously usable in all the cases in which the electric energy is not

available or usable.

C L A I M S

1. A portable operating apparatus with interchangeable heads characterised by comprising:

a) a basic unit including, inside a body (1) provided with a handle (2),:

- a motor (3),

- a hydraulic pump (7) driven by said motor (3),

- a cylinder-piston system (18,19) connected to said pump (7) through at least a duct (14,29) for unidirectional feeding the fluid, the rod (20) of the piston (19) coming out from the body,

- a connection flange (4) for an operating head (43,46,51,56,63,68), said flange encircling the passage opening of said rod (20),

- a tank (5) for feeding the fluid to the pump (7),

- at least a duct (30) directly connecting said cylinder (18) to said tank (5), provided with a valve (31) actuable from outside,

b) a plurality of operating heads (43,46,51,56,63,68), each of them provided with a flange (42) engageable with said connection flange (4) of the basic unit, and

c) means (40) for quickly binding said flanges (4,42), coupled in facing conditions, so that the displacement of the piston rod (20) of the basic unit causes actuating of the operating head (43,46,51,56,63,68).

2. Apparatus as claimed in claim 1 characterised in that the motor (3) is an electric motor.

3. Apparatus as claimed in claim 1 characterised in that the motor (3) is an internal combustion motor.

4. Apparatus as claimed in claim 1 characterised in that the pump (7) is a piston pump.

5. Apparatus as claimed in claim 4 characterised in that the pump (7) is a multi-piston pump.

6. Apparatus as claimed in claim 5 characterised in that the pump (7) comprises a plurality of pistons (11) cyclically actuated.

7. Apparatus as claimed in claim 6 characterised in that the pump (7) comprises a multi-lobes (10) body in which corresponding cylindric hollows (8) are made housing pistons (11) cyclically actuated by one middle eccentric motor (15), each hollow (8) being provided with at least an inlet (12) and an outlet opening (13), the latter provided with a non-return valve.

8. Apparatus as claimed in claim 1 characterised in that the cylinder-piston system (18,19) is a single-acting system and is provided with elastic means (3) which when the pump (7) is not actuated, keep the piston (19) in rest end-of-travel condition.

9. Apparatus as claimed in claim 1 characterised in that the head of the piston (19) is provided with at least a passing hole (34) closeable by a valve (32), elastically kept in open condition when no other external stresses occur, and kept in close condition when the piston (19) is in its rear end-of-travel condition and/or when the pressure in the chamber (18) upstream the piston (19) overcomes of a prefixed value the pressure in the chamber (18) downstream the piston (19).

10. Apparatus as claimed in claim 9 characterised in that the valve (32) is a mushroom-shaped valve, with its head facing the passing holes (34) housed in the zone of the chamber (18) upstream the piston (19) and with its stem having length higher than the thickness of the head of the piston (19), said valve (32) being provided with a spring (35) which causes the opening of the passing hole (34) when the spring is in its rest condition.

11. Apparatus as claimed in claim 1 characterised in that the cylinder-piston (18,19) system is provided with a safety-valve (25,26,27) closing a duct (28) connecting the two zones of the chamber (18) upstream and downstream the piston (19) and acting so that to prevent the passage of the oil from downstream to upstream, but to allow the opposite passage when a prefixed value of the difference of pressures is overcome.

12. Apparatus as claimed in claim 11 characterised in that the safety-valve comprises a stem (25) elastically kept by a spring (26) in closure condition of the duct (28).

13. Apparatus as claimed in claim 1 characterised in that the valve (31) is a handly actuable valve.

14. Apparatus as claimed in claim 1 characterised in that the valve (31) housed in the duct (30) is an electro-valve actuated by the same control of the motor (3).

15. Apparatus as claimed in claim 1 characterised in that it comprises an annular element (40) formed of at least two separable portions which are simultaneously engageable with the two flanges (4,42) respectively foreseen in the basic unit and in the operating heads (43,46,51,56,63,68).

16. Apparatus as claimed in claim 15 characterised in that the annular element (40) consists of two portions mutually engageable and provided with edges engageable with corresponding grooves (39,41) foreseen in the flanges (4,42).

17. Apparatus as claimed in claim 1 characterised in that the cylinder-piston (18,19) system is a double-acting system.

18.    Apparatus   as claimed in claim 1 characterised in   that the operating head consists of a shearing head having a blade (45)  bound  to  the portion of the head  provided  with  the flange  (42) and a movable blade (45') bound to the rod  (20) of the piston (19).

19.    Apparatus   as claimed in claim 1 characterised in   that the  operating head consists of a bending head (46) having  a fixed  mould  (47) bound to the portion of the head  provided with  the flange (42) and a counter-mould (48) movable  along said portion and bound to the rod (20) of the piston (19).

20.    Apparatus   as claimed in claim 1 characterised in  that the  operating head consists of a bending head (46) having  a fixed counter-mould bound to the portion of the head provided with  the flange (42) and a mould movable along said  portion and bound to the rod (20) of the piston (19).

21.    Apparatus as claimed in claims 19 and 20  characterised in  that  the  counter-mould  (48) of  the  bending  head  is provided with bending rollers (50).

22.    Apparatus  as claimed in claim 1 characterised in  that the  operating head consists of a snips head (51) having  the blades (52) coplanar and  articulated to two pins  (53),  a divaricating  wedge  (55) being  placed between the  arms  of said  blades (52) and actuable by the rod (20)  so  that  to cause the closure of the blades (52).

23. Apparatus as claimed in claim 1 characterised in that the operating head consists of a snips head (56) with the blades (57) articulated to one pin (58) and connected to a pair of arms (59) which are simultaneously actuable by the rod (20) so that to cause the scissors closure of the blades (57).

24. Apparatus as claimed in claim 1 characterised in that the operating head consists of a punching head (63), with its die (64) connected to the flange (42) and provided with an extractor member (67), and a punch (66) bound to the rod (20).

25. Apparatus as claimed in claim 12 characterised in that the operating head consists of a divaricating head (68), having a body (69) connected to the flange (42) and a pair of divaricating arms (70) articulated to said body and articulated to a further pair of arms (71) which are simultaneously actuable by the rod (20) so that to cause the opening of said arms (71).

26. Apparatus as claimed in claim 1 characterised in that the connection between the rod (20) and the movable part of the operating head (43,46,51,56,63,68) is obtained by their direct contact, the active stroke of said movable part being obtained by the displacement of the piston and the return stroke being obtained by elastic means.

27.    Apparatus as claimed in claim 1 characterised in that the movable part of the operating head is steady connected to the rod (20) which with its displacements causes both the active and the return stroke of said movable part.

28.    Apparatus as claimed in claim 27 characterised in that the movable part of the operating head is screwed on to the rod (20).

PCT/EP 8 6 / 0 0 5 9 6.

1/3

0235403

**FIG.1**

**FIG.3**

**FIG. 4**

**FIG.5**

**FIG.6**

FIG.2

FIG. 7

FIG. 8

FIG. 9

FIG. 10

FIG. 11

FIG. 12

0235403

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-U-8 121 716 (IHG)<br>* Whole document * | 1,2,8 | B 26 D 5/12 |
| A | | 13 | |
| | --- | | |
| Y | FR-A-2 091 669 (BOCK)<br>* Figure 2 * | 1 | |
| A | | 2,4,8,<br>11,12,<br>18 | |
| | --- | | |
| Y | CH-A- 384 501 (HYDRODYN)<br>* Whole document * | 1 | |
| A | | 17-21,<br>24,27,<br>28 | TECHNICAL FIELDS SEARCHED (Int. Cl.4)<br><br>B 25 F<br>B 25 B<br>B 23 D |
| A | ÖLHYDRAULIK UND PNEUMATIK, 1984, page 80, Report, Mainz, DE; "5 to Presskraft mit einer Hand" | 1,2,4,<br>8,11 | F 15 B<br>B 26 D<br>B 21 D<br>F 16 L |
| | --- | | |
| A | DE-A-1 627 140 (BOCK)<br><br>* Whole document * | 1,2,4-<br>10,18 | |
| | ---    -/- | | |

The present search report has been drawn up for all claims

| Place of search | Date of completion of the search | Examiner |
|---|---|---|
| THE HAGUE | 07-06-1987 | RIS M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

European Patent Office

**EUROPEAN SEARCH REPORT**

Application number

EP 86 20 2028

| DOCUMENTS CONSIDERED TO BE RELEVANT | | | Page 2 |
|---|---|---|---|
| Category | Citation of document with indication, where appropriate, of relevant passages | Relevant to claim | CLASSIFICATION OF THE APPLICATION (Int. Cl.4) |
| A | FR-A-2 426 174 (HARNISCHFEGER)<br>* Page 1, lines 18-21 * | 3 | |
| A | GB-A-2 132 298 (DOBSON) | 15,16 | |
| A | US-A-2 241 089 (HAMPE) | 15,16 | |
| A | GB-A- 850 248 (LANG) | 20 | |
| A | FR-A-2 199 672 (GRAVELAIS) | 22,26 | |
| A | US-A-4 506 445 (HALE FIRE PUMP) | 23 | |
| A | FR-A-2 500 344 (PARMENTIER) | 25 | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 07-06-1987 | RIS M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82